# EUROPÄISCHE PATENTSCHRIFT

(11) **EP 1 841 251 B1**
(45) Veröffentlichungstag und Bekanntmachung des Hinweises auf die Patenterteilung: **08.07.2009**
(21) Anmeldenummer: 06006976.2
(22) Anmeldetag: 31.03.2006
(51) Int. Cl.: H04W 24/02, H04L 12/56

(54) **Rekonfiguration von Funknetzen**
Reconfiguration of radio networks
Reconfiguration d'un réseau de communication sans fil

(43) Veröffentlichungstag der Anmeldung: 03.10.2007
(73) Patentinhaber: Nokia Siemens Networks GmbH & Co. KG, 81541 München (DE)
(72) Erfinder: Luo, Jijun, 80797 München (DE); Pan, Jianming, Dr., 1220 Wien (AT); Slanina, Peter, 3441 Judenau (AT)

(56) Entgegenhaltungen:
- US-A1- 2004 203 719
- US-B1- 6 829 491
- E2R II PROJECT - MOTOROLA LABS: "End-to-end Reconfigurability System Requirements" E2R WHITE PAPER (PHASE 1), [Online] Januar 2006 (2006-01), Seiten 1-12, XP002400147 Gefunden im Internet: URL:http://e2r.motlabs.com/whitepapers/> [gefunden am 2006-09-20]

## Beschreibung

### Technisches Gebiet

Die Erfindung betrifft ein Verfahren zur Rekonfiguration von Funknetzen

### Stand der Technik

Für die Benutzer mobiler Endgeräte stehen Funknetze mit unterschiedlichen Zugriffstechniken zur Verfügung. Dabei handelt es sich beispielsweise um Mobilfunknetze der 2. oder 3. Generation (GSM, UMTS, Wireless Local Area Networks (WLAN) oder auch sogenannte WIMAX- Funknetze (Worldwide Interoperability for Microwave Access) gemäß Standard IEEE 802.16.

Mit einem entsprechend ausgerüsteten, d.h. multimode-fähigen Endgerät hat daher der Benutzer die Möglichkeit, an einem bestimmten Ort wie beispielweise einem Flughafen das für ihn vorteilhafteste Netz für seine Kommunikation auszuwählen.

Es bestehen darüber hinaus Bestrebungen künftige Netze hinsichtlich ihrer Technologie dynamisch konfigurierbar zu gestalten um sie so an die Bedürfnisse der Benutzer optimal anzupassen. Ein derartiges Projekt wird von der Europäischen Kommission im Rahmen des 6. Rahmenprogrammes unter dem Titel End-to-End Reconfigurability - E2R verfolgt. Wesentliches Element bei einer Rekonfiguration eines Netzes ist die Entscheidung, wann und unter welchen Umständen ein Netzwerk rekonfigurieren soll, d.h. beispielsweise von einem Mobilfunknetz der zweiten Generation nach dem GSM Standard auf ein Mobilfunknetz der dritten Generation nach dem UMTS Standard wechseln soll Aus US 6 829 491 B1 sind Verfahren bekannt zur dynamischen Optimierung eines Netzwerkes anhand von Betriebs-Metriken des Netzwerkes, die von einem Netzwerk Controller angefordert werden.

Aus US 2004/0203719 A1 ist ein Verfahren zur Optimierung eines drahtlosen Netzwerkes bekannt, bei dem Daten bzgl. des Netzwerk Status von einem drahtlosen Endgerät an das Netz übertragen werden und das Netz mit Hilfe dieser Daten optimiert wird.

### Darstellung der Erfindung

Der Erfindung liegt die Aufgabe zugrunde, ein Verfahren anzugeben, welches die Entscheidungsgrundlage für die Rekonfiguration eines Funknetzes bilden kann.

Erfindungsgemäß geschieht dies mit einem Verfahren der eingangs genannten Art, bei dem auf der Basis von statistischen Netzwerkdaten und den technischen Leistungsprofilen der aktiven Endgeräte ein optimaler Betriebszustand eines Funknetzes ermittelt wird, dass in dem Fall, bei dem der derzeitige Betriebszustand nicht dem optimalen Betriebszustand entspricht, die aktuelle Bereitschaft der aktiven Endgeräte des Netzwerkes zu einer Rekonfiguration überprüft wird und bei dem diese Informationen zur Entscheidung über die Rekonfiguration des Netzwerkes herangezogen werden.

Durch Berücksichtigung der aktuellen Stati der Teilnehmer eines Netzes kann die Aussage über die Zweckmäßigkeit einer Rekonfiguration des Netzes verfeinert und dynamisch an die aktuellen Bedürfnisse der Netzteilnehmer angepasst werden.

Vorteilhaft ist es, wenn als Parameter für die Ermittlung des optimalen Betriebszustandes eines Funknetzes die spektrale Effizienz, Interferenzen und die Auslastung der Übertragungswege herangezogen wird. Die genannten Parameter sind besonders zur Beschreibung der Netzsituation geeignet.

Vorteilhaft ist es weiterhin, wenn als Parameter für die Ermittlung der aktuellen Bereitschaft der aktiven Endgeräte des Netzwerkes deren Akku-Ladezustand, und/oder die lokale Position im Netz und/ oder der Zustand der genutzten Dienste herangezogen wird.

Eine Rekonfiguration führt vorübergehend zu einer eingeschränkten Funktionsfähigkeit des Netzes. Die sich daraus ergebenden Nachteile sind für den Teilnehmer nur dann akzeptabel, wenn er die Absicht hat, den bestehenden Dienst, z.b. eine Datenverbindung noch länger zu nutzen. Wenn hingegen beispielsweise aufgrund des Akkuzustandes, aufgrund der Dauer eines bestimmten Dienstes, oder aber aufgrund eines absehbaren Netzwechsels, weil sich der Teilnehmer beispielsweise auf eine geografische Netzgrenze zubewegt ein baldiges Ende des aktiven Zustandes absehbar ist, dann ist ein Konfigurationswechsel für den Teilnehmer nicht zweckmäßig

Es ist günstig, wenn Endgeräte, die sich während der Rekonfiguration eines Netzes neu anmelden, sofort die Zielkonfiguration übernehmen.

Vorteilhaft ist es weiterhin, wenn zur Überprüfung der aktuellen Bereitschaft der aktiven Endgeräte des Netzwerkes zu einer Rekonfiguration die Signalisierungsverfahren des Netzwerkes herangezogen werden.

Vorteilhaft ist es auch, wenn einzelne Zellen eines Funknetzes unterschiedliche Betriebszustände aufweisen und einzelne Rekonfigurationsvorgänge eine oder mehrere Zellen dieses Netzes betreffen können. Dadurch wird die Flexibilität eines Funknetzes weiter erhöht.

### Kurzbeschreibung der Zeichnung

Die Erfindung wird anhand von Figuren näher erläutert. Dies zeigen beispielhaft
Fig. 1 den Ablauf eines erfindungsgemäßen Verfahrens zur Entscheidung über eine Rekonfiguration
Fig. 2 den Ablauf der Anmeldung eines Endgerätes UE an ein Netz.
Fig. 3 den Aufbau eines System Information Blocks des Broadcast Control Channels

### Ausführung der Erfindung

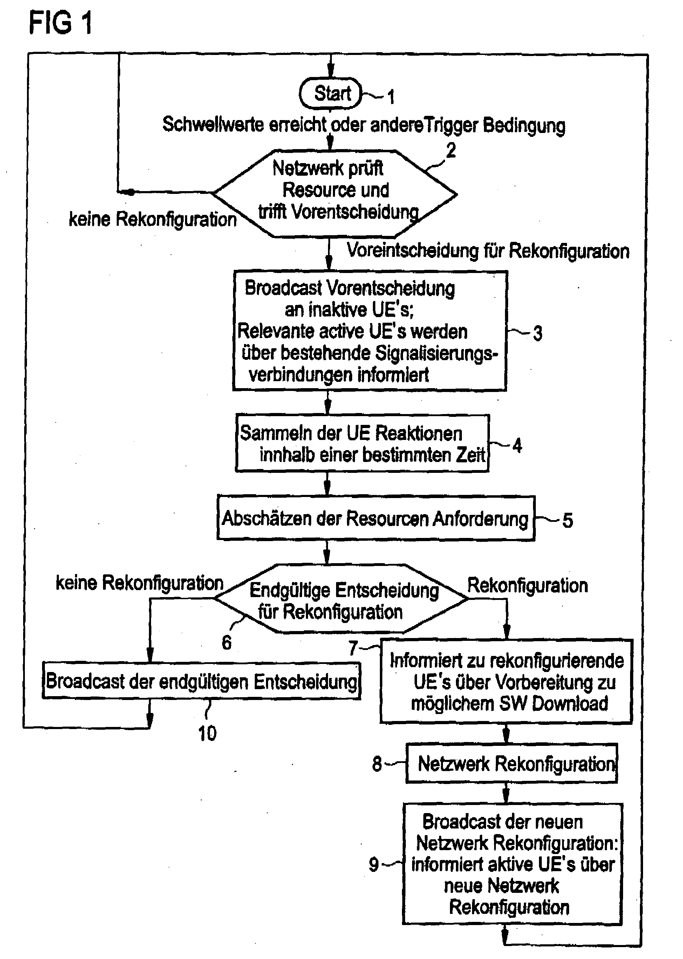

Der Ablauf des in Fig.1 dargestellten beispielhaften Verfahrens ist wie folgt:
Aufgrund statistischer Netzwerkdaten und der Teilnehmerprofile wird ermittelt, ob sich das Netzwerk bzw. Teile davon wie einzelne Funkzellen und die jeweiligen Teilnehmerendgeräte in einem optimalen Betriebszustand befinden (Schritt 1). Wenn aufgrund dieser Daten eine Rekonfiguration zweckmäßig erscheint, wird in Schritt 2 eine Überprüfung der Netzwerkresourcen durchgeführt und eine Vorentscheidung bezüglich der möglichen Rekonfiguration getroffen.

Diese Vorentscheidung wird an die aktiven Endgeräte über die bestehenden Signalisierungsverbindungen kommuniziert, an inaktive Endgeräte wird diese Entscheidung über den Broadcast-Control Channel gesendet (Schritt 3).

Die aktiven Endgeräte überprüfen daraufhin ihre jeweilige Bereitschaft zu einer Rekonfiguration, die nur dann Sinn macht, wenn die Vorteile der Rekonfiguration, z.B. höhere verfügbare Datenrate, höhere Quality of Service etc. die durch die Rekonfiguration bedingte vorübergehende Einschränkung der Funktionsfähigkeit des Netzes überwiegen und senden daraufhin ihre jeweilige Entscheidung an die für den Rekonfigurationsprozess verantwortliche Netzeinheit (Schritt 4).

Auf Basis der eingetroffenen Antworten wird in Schritt 5 der Betriebszustand neu bewertet und eine endgültige Entscheidung über die Rekonfiguration getroffen (Schritt 6). Diese Entscheidung wird einerseits mittels Broadcast-Verfahren, über den Broadcast Control Channel BCCH (Schritt 10) verbreitet und andererseits den aktiven Endgeräten über die bestehenden Signalisierungsverbindungen kommuniziert (Schritt 7).

Danach wird in Schritt 8 das Netzwerk neu konfiguriert und in Schritt 9 der Abschluss der Rekonfiguration den Teilnehmern kommuniziert.

Die Rekonfiguration des Netzes und seiner Elemente, beispielsweise der Basisstationen kann beispielsweise durch Rekonfigurationsserver unterstützt werden, welche die Stati der unterschiedlichen Betriebszustände wie beispielsweise der jeweils verwendeten Funk-Zugangstechnologien für die Netzelemente und die Endgeräte abrufbar speichern.

Es ist auch zweckmäßig, wenn einzelne Zellen eines Funknetzes unterschiedliche Betriebszustände aufweisen und einzelne Rekonfigurationsvorgänge eine oder mehrere Zellen dieses Netzes betreffen.

Dabei kann für die Rekonfiguration der Teilnehmer vorgesehen werden, dass zur Vermeidung von instabilen Zuständen ein zeitverzögerter Wechsel in den neuen Betriebszustand vorgesehen wird.

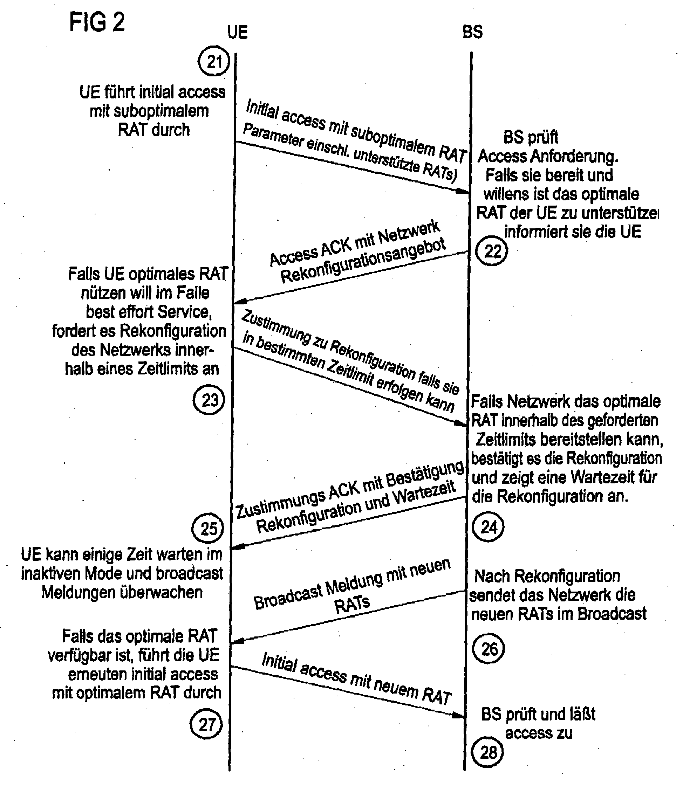

In Fig. 2 ist der Ablauf der Anmeldung eines Endgerätes UE an ein Netz näher dargestellt. In diesem Fall wird von Seiten des Endgerätes zuerst der aktuelle suboptimale Betriebszustand RAT angewendet (21). Von Seiten des für die Rekonfiguration verantwortlichen Netzelementes beispielsweise einer Basestation eines Mobilfunknetzes BS wird überprüft, ob auch eine Anwendung des für das Endgerät optimalen Betriebszustandes möglich wäre und eine ggf. vorliegende Bereitschaft zur Unterstützung dieses optimalen Betriebszustandes an das Endgerät UE signalisiert (22). Dieses überprüft anhand seiner Betriebsparamter die Zweckmäßigkeit einer Rekonfiguration und signalisiert diese dem Netzelement BS zusammen mit einem Zeitlimit für die Rekonfiguration (23). Wenn vom Netzelement BS das Zeitlimit für die Rekonfiguration eingehalten werden kann, wird dies dem Endgerät UE zusammen mit einer voraussichtlichen Zeitdauer signalisiert, die Rekonfiguration eingeleitet und der Abschluss derselben mittels Broadcast- Verfahren kommuniziert (24, 26). Das Endgerät UE verharrt dann für die Dauer der Rekonfiguration in einem Wartezustand (25) und meldet sich nach Abschluss des Vorganges im optimalen Betriebszustand erneut an (27). Die Anmeldung wird vom Netzelement in der für diesen Betriebszustand vorgesehenen Weise behandelt (28).

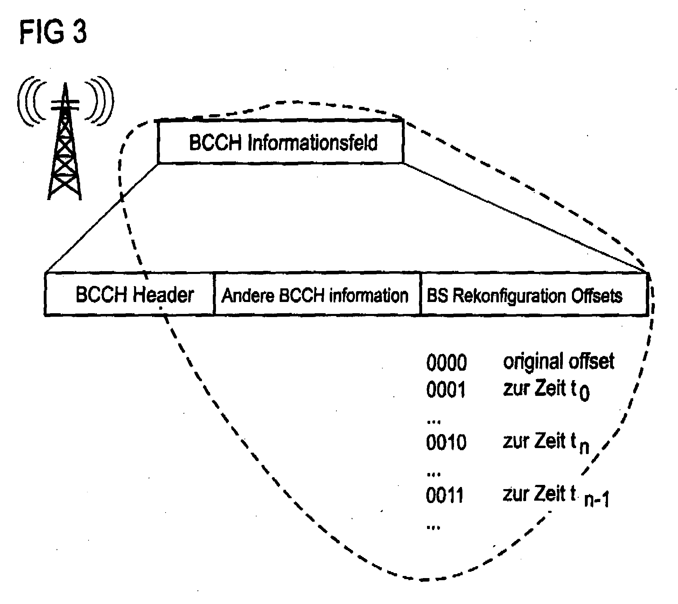

In Fig.3 ist beispielhaft der Aufbau eines System Information Blocks SIB des Broadcast Control Channels dargestellt. Durch Erweiterung dieser Nachricht um Information zur Rekonfiguration wird eine einfache Lösung zur Kommunikation mit inaktiven Endgeräten im Netzbereich geschaffen.

## Patentansprüche

1. Verfahren zur Rekonfiguration von Funknetzen, wobei auf der Basis von statistischen Netzwerkdaten und den technischen Leistungsprofilen der aktiven Endgeräte ein optimaler Betriebszustand eines Funknetzes ermittelt wird, **dadurch gekennzeichnet, dass** in dem Fall, dass der derzeitige Betriebszustand nicht dem optimalen Betriebszustand entspricht, die aktuelle Bereitschaft der aktiven Endgeräte des Netzwerkes zu einer Rekonfiguration überprüft wird und dass diese Informationen zur Entscheidung über die Rekonfiguration des Netzwerkes herangezogen werden.

2. Verfahren nach Anspruch 1, **dadurch gekennzeichnet, dass** als Parameter für die Ermittlung des optimalen Betriebszustandes eines Funknetzes die spektrale Effizienz, Interferenzen und die Auslastung der Übertragungswege herangezogen wird.

3. Verfahren nach Anspruch 1 oder 2, **dadurch gekennzeichnet, dass** als Parameter für die Ermittlung der aktuellen Bereitschaft der aktiven Endgeräte des Netzwerkes deren Akku-Ladezustand, und/oder die lokale Position im Netz und/ oder der Zustand der genutzten Dienste herangezogen wird.

4. Verfahren nach einem der Ansprüche 1 bis 3, **dadurch gekennzeichnet, dass** während der Rekonfiguration eines Netzes neu angemeldete Endgeräte sofort die Zielkonfiguration übernehmen.

5. Verfahren nach einem der Ansprüche 1 bis 4, **dadurch gekennzeichnet, dass** zur Überprüfung der aktuellen Bereitschaft der aktiven Endgeräte des Netzwerkes zu einer Rekonfiguration die Signalisierungsverfahren des Netzwerkes herangezogen werden.

6. Verfahren nach einem der Ansprüche 1 bis 5, **dadurch gekennzeichnet, dass** einzelne Zellen eines Funknetzes unterschiedliche Betriebszustände aufweisen und einzelne Rekonfigurationsvorgänge eine oder mehrere Zellen dieses Netzes betreffen können.

## Claims

1. Method for the reconfiguration of radio networks, wherein an optimum operating state of a radio network is determined on the basis of statistical network data and the technical performance profiles of the active terminals, **characterized in that**, in the case where the current operating state does not correspond to the optimum operating state, the current readiness of the active terminals of the network for a reconfiguration is checked and **in that** this information is used for the decision about the reconfiguration of the network.

2. Method according to Claim 1, **characterized in that** the spectral efficiency, interferences and the capacity utilization of the transmission paths are used as parameters for the determination of the optimum operating state of a radio network.

3. Method according to Claim 1 or 2, **characterized in that**, the state of battery charge of the active terminals of the network and/or the local position in the network and/or the state of the services used is used as a parameter for the determination of the current readiness of said active terminals of the network.

4. Method according to one of Claims 1 to 3, **characterized in that**, during the reconfiguration of a network, newly registered terminals immediately take over the target configuration.

5. Method according to one of Claims 1 to 4, **characterized in that** the signaling methods of the network are used for checking the current readiness of the active terminals of the network for a reconfiguration.

6. Method according to one of Claims 1 to 5, **characterized in that** individual cells of a radio network have different operating states and individual reconfiguration processes can relate to one or more cells of this network.

## Revendications

1. Procédé pour la reconfiguration de réseaux radio, un état de service optimal d'un réseau radio étant déterminé sur la base de données de réseau statistiques et des profils de puissance techniques des terminaux actifs, **caractérisé en ce que**, dans le cas où l'état de service actuel ne correspond pas à l'état de service optimal, la disponibilité actuelle des terminaux actifs du réseau pour une reconfiguration est vérifiée et **en ce que** ces informations sont prises en compte pour la décision concernant la reconfiguration du réseau.

2. Procédé selon la revendication 1, **caractérisé en ce que** l'efficience spectrale, les interférences et le taux d'utilisation des voies de transmission sont pris en compte comme paramètres pour la détermination de l'état de service optimal d'un réseau radio.

3. Procédé selon la revendication 1 ou 2, **caractérisé en ce que**, comme paramètres pour la détermination de la disponibilité actuelle des terminaux actifs du réseau, leur état de charge d'accu et/ou la position locale dans le réseau et/ou l'état des services utilisés sont pris en compte.

4. Procédé selon l'une quelconque des revendications 1 à 3, **caractérisé en ce que**, pendant la reconfiguration d'un réseau, des terminaux nouvellement déclarés adoptent immédiatement la configuration cible.

5. Procédé selon l'une quelconque des revendications 1 à 4, **caractérisé en ce que**, pour vérifier la disponibilité actuelle des terminaux actifs du réseau pour une reconfiguration, les procédés de signalisation du réseau sont pris en compte.

6. Procédé selon l'une quelconque des revendications 1 à 5, **caractérisé en ce que** des cellules individuelles d'un réseau radio présentent différents états de service et des opérations de reconfiguration individuelles peuvent concerner une ou plusieurs cellules de ce réseau.
